(19) Europäisches Patentamt

European Patent Office

Office européen des brevets

(11) Veröffentlichungsnummer: **0 249 747 B1**

(12) **EUROPÄISCHE PATENTSCHRIFT**

(45) Veröffentlichungstag der Patentschrift: **27.05.92**

(21) Anmeldenummer: **87107055.3**

(22) Anmeldetag: **15.05.87**

(51) Int. Cl.⁵: **C08K 5/21**, C08L 61/24, C08G 12/12

(54) **Härterzusammenstellung für die Härtung von Harnstoff-Formaldehyd-Leimharzen und deren Verwendung bei der Verleimung von Spanplatten.**

(30) Priorität: **17.05.86 DE 3616722**

(43) Veröffentlichungstag der Anmeldung:
**23.12.87 Patentblatt 87/52**

(45) Bekanntmachung des Hinweises auf die
Patenterteilung:
**27.05.92 Patentblatt 92/22**

(84) Benannte Vertragsstaaten:
**AT BE CH DE FR LI NL**

(56) Entgegenhaltungen:
**EP-A- 0 150 420**
**DE-A- 2 037 174**
**DE-A- 2 745 951**

**PATENT ABSTRACTS OF JAPAN, Band 8, Nr. 71 (C-217)[1508], 3. April 1984; & JP-A-58 222 173 (MITSUI TOATSU KAGAKU K.K.) 23-12-1983**

**Deppe, Ernst, Technologie der Spanplatten, 1964, S. 40, Urea-Formaldehyde Resins, Beat Meyer, Addison-Wesley, 1979**

(73) Patentinhaber: **BASF Aktiengesellschaft
Carl-Bosch-Strasse 38
W-6700 Ludwigshafen(DE)**

(72) Erfinder: **Lehnert, Heinz
Anselm-Feuerbach-Strasse 11 f
W-6710 Frankenthal(DE)**
Erfinder: **Pitteroff, Walter, Dr.
In den Hahndornen 10
W-6719 Bobenheim(DE)**
Erfinder: **Matthias, Guenther, Dr.
Meergartenweg 25 a
W-6710 Frankenthal(DE)**
Erfinder: **Wittmann, Otto
Max-Beckmann-Strasse 13 b
W-6710 Frankenthal(DE)**

EP 0 249 747 B1

**Beschreibung**

Die Erfindung betrifft eine Härterzusammensetzung für Harnstoff-Formaldehyd-Leimharze und deren Verwendung bei der Verleimung von Spanplatten.

Bei der Verarbeitung von Harnstoff-Formaldehyd-Leimharzen ist die Verwendung von Härterzusammensetzungen üblich. Diese enthalten Härtungsbeschleuniger, üblicherweise kurz als Härter bezeichnet. Es handelt sich hierbei im allgemeinen um sauer reagierende oder säurebildende Substanzen, die das Aushärten der Aminoharze beschleunigen.

Es ist bekannt, daß man mit Ammoniumchlorid Harnstoff-Formaldehyd-Leimharze einwandfrei härten kann. Gleichermaßen wirken viele andere Ammoniumsalze starker Säuren, weil das Ammoniumion mit Formaldehyd reagiert und die Säure als eigentlich härtende Substanz freisetzt.

Bekannt ist auch die Verwendung freier Säuren als Härter, vergleiche beispielsweise Urea-Formaldehyde Resins, Beat Meyer, Addison-Wesley, Publishing Company, 1979, Seiten 112 ff. Bekannt ist auch der Zusatz von Alkalimetallhalogeniden zu Harnstoff-Formaldehyd-Leimharzen, vergleiche DE-A-2 745 951. Nach diesem Vorschlag soll durch die Zugabe einer Kombination aus einer organischen Komponente und einem Alkalimetallhalogenid die Aushärtungsgeschwindigkeit des Harzes erhöht werden.

Es ist auch bekannt, Salze, einschließlich Ammoniumsalze, als Zusätze zu Aminoharzen zu verwenden, nicht um die Festigkeit des Produkts zu erhöhen, sondern um andere Eigenschaften hervorzurufen, beispielsweise eine Klärung der Leimflotte zu erzielen.

Die DE-A-2 037 174 lehrt die Verwendung wasserlöslicher Salze aus Alkalihalogeniden, Erdalkalihalogeniden oder deren Mischungen bei der Herstellung von Spanplatten. Der Zusatz dieser Salze soll zu einer Einsparung der einzusetzenden Harzleimmenge führen, ohne daß eine Einbuße an Bindefestigkeit auftritt. Man verwendet einen Zusatz von etwa 1 bis 35 Gew.%, bezogen auf die eingesetzte Leimharzmenge.

Der Erfindung liegt die Aufgabe zugrunde, Härterzusammensetzungen für die Härtung von Harnstoff- und Formaldehyd-Leimharzen zur Verfügung zu stellen, welche die Herstellung von Spanplatten mit guten mechanischen Eigenschaften, insbesondere mit einer erhöhten Querzugfestigkeit und Biegefestigkeit bei langer Gebrauchsdauer, dabei aber kurzen Presszeiten und akzeptablen Quellwerten erlauben.

Diese Aufgabe wird gelöst mit einer Härterzusammensetzung für die Härtung von Harnstoff-Formaldehyd-Leimharzen, die bis zu 20 Gew.% Melamin und bis zu 5 Gew.% Phenol, jeweils bezogen auf das Gesamtgewicht des Leimharzes, aufweisen können, enthaltend

(a) ein Ammoniumsalz einer anorganischen oder organischen Säure,
die dadurch gekennzeichnet ist, daß sie auch
(b) eine Säure, die nicht mit der Härterzusammensetzung reagiert,
(c) Harnstoff,
(d) ein Glykol oder eines seiner funktionellen Derivate, sowie gegebenenfalls
(e) ein Metallsalz
enthält, und daß eine wäßrige Lösung der Härterzusammensetzung einen pH von <2 aufweist.

Die Erfindung betrifft auch die Verwendung der obigen Härterzusammensetzungen bei der Verleimung von Spanplatten.

Dabei weist überraschenderweise eine Leimflotte mit einem stark sauren Härter, der z.B. Schwefelsäure enthält, mit pH <2 eine besonders lange Gebrauchsdauer auf, wobei allerdings ein Glykol anwesend sein muß.

Nach einer bevorzugten Ausführungsform der Erfindung handelt es sich beim Metallsalz um ein Alkali- oder Erdalkalisalz. Besonders bevorzugt sind hierbei Magnesium-, Lithium- und Kalziumsalze, aber auch Aluminiumsalze, die insbesondere als Chloride oder Sulfate vorliegen können. Es kommen aber auch andere Salze in Betracht, wobei man bei der Auswahl auch auf wirtschaftliche Gesichtspunkte achten sollte. So läßt sich beispielsweise auch Kochsalz einsetzen. Selbstverständlich können Gemische der obigen Salze verwendet werden. Die Reihenfolge in der Wirksamkeit des Salzzusatzes liegt - in abnehmender Wirksamkeit - in der Reihe Lithium, Kalzium und Magnesium.

Wenn man erfindungsgemäß als Säure, die nicht mit der Härterlösung reagiert, eine starke Säure, beispielsweise Schwefelsäure oder ein Hydrogensulfat, beispielsweise Ammoniumhydrogensulfat, Natriumhydrogensulfat und dergleichen einsetzt und hierbei in wäßriger Lösung einen pH von <2 erhält, muß ein Glykol zugesetzt werden, um zu verhindern, daß durch den Zusatz der Säure Leimharz ausfällt, was sonst zum Verstopfen der Siebe und zu einem ungleichmäßigen Leimauftrag führt, was zur Folge hätte, daß die Eigenschaften der Spanplatten weit unterhalb der zulässigen Normen lägen.

Die erfindungsgemäße Härterzusammensetzung kommt für sämtliche Harnstoff-Formaldehyd-Leimharze in Betracht. Diese können bis zu 20 Gew.% Melamin und bis zu 5 Gew.% Phenol, jeweils bezogen auf das Gesamtgewicht des Leimharzes, aufweisen. Die Harze können auch übliche Zusätze, beispielsweise

2

Biozide, Fungizide, latente Härter, Wachse, Thixotropiermittel und andere Zusätze enthalten.

Ein Gehalt an Harnstoff ist obligatorisch im erfindungsgemäßen Härter. Er bewirkt nicht nur eine Absenkung des Gehalts an freiem Formaldehyd in der Platte, auch die mechanischen Eigenschaften der Platte werden vorteilhaft beeinflußt, insbesondere überraschenderweise das Quellverhalten, welches sonst durch Harnstoff verschlechtert wird; d .h. die Quellung der Spanplatte in Wasser ist sonst erhöht.

Die erfindungsgemäße Härterzusammensetzung enthält stets ein Ammoniumsalz einer anorganischen oder organischen Säure. Hierbei handelt es sich vorzugsweise um Ammoniumchlorid, Ammoniumsulfat, Ammoniumphosphat (-hydrogenphosphat, -dihydrogenphosphat), Ammoniumnitrat, Ammoniumbromid oder Ammoniumformiat. Besonders zweckmäßig werden Ammoniumsalze relativ starker Säuren eingesetzt, beispielsweise von Säuren, die einen pKa von <3, insbesondere von <2, bei $25^0$C besitzen. Beim Härtungsvorgang reagiert das Ammoniumion des Ammoniumsalzes mit Formaldehyd, wodurch die Säure als eigentlich härtende Substanz freigesetzt wird.

Eine weitere Komponente der erfindungsgemäßen Härterzusammensetzung ist eine Säure, die nicht mit der Leimzusammensetzung reagiert, d.h. nicht zu einer wesentlichen Veränderung der Leimzusammensetzung, beispielsweise durch Ausfällung unlöslicher Salze, führt. Hierbei handelt es sich vorzugsweise um eine anorganische oder organische Säure mit einem pKa <3 bei $25^0$C. Besonders bevorzugte Säuren sind Schwefelsäure, Hydrogensulfat (z.B. Ammonium- oder Natriumhydrogensulfat), aber auch Amidosulfonsäuren oder Phosphorsäure sind brauchbar.

Als Glykol oder eines seiner funktionellen Derivate werden hier ganz allgemein Glykole mit freien Hydroxylgruppen sowie ganz bzw. teilweise veresterte oder veretherte Glykole verstanden, soweit sie wasserlöslich oder wasserdispergierbar sind. Grundsätzlich kommen beliebige Glykole als Zusatz in Betracht, insbesondere Ethylenglykol, Diethylenglykol, Triethylenglykol usw., Oligoglykole, beispielsweise tri-und tetramere Oligoethylenglykole (die Anzahl der wiederkehrenden Einheiten in den Oligoglykolen kann beispielsweise zwischen 1 und 4 liegen), sowie Mischungen dieser Glykole.

Die erfindungsgemäße Härterzusammensetzung liegt bevorzugt in flüssiger Form vor; sie kann aber auch in fester, z.B. pulverförmiger Form vorliegen und wird dann vor der Anwendung in Wasser gelöst oder dispergiert.

Die erfindungsgemäße Härterzusammensetzung kann auch andere Zusätze enthalten, beispielsweise wasserlösliche Amide oder Amine, gegebenenfalls auch freie Melamine. Diese Zusätze können in methylolierter oder mit Formaldehyd kondensierter Form vorliegen. Auch andere, übliche Zusätze zu Härterzusammensetzungen können vorliegen.

Die erfindungsgemäßen Vierstoff- und Fünfstoffgemische als einheitlicher Härter der Leimflotte, die vor dem Verpressen zugemischt werden, sind im Stand der Technik weder beschrieben, noch nahegelegt. Es kommt auf jede der Komponenten an. Durch Versuche wurde festgestellt, daß wesentliche Abwandlungen der erfindungsgemäßen Härterzusammensetzung, in der die ein oder andere Komponente ausgelassen oder durch einen anderen Stoff ersetzt wurde, nicht zu den vorteilhaften Ergebnissen bei der Spanplattenherstellung führen. Das ist nachstehend gezeigt:

Setzt man Ammoniumchlorid allein zu, so werden die Presszeiten zwar kürzer, Festigkeit und Quellwerte werden jedoch schlechter. Die Formaldehydabspaltung ist höher als bei der erfindungsgemäßen Härterzusammensetzung.

Verwendet man ein Dreistoffgemisch aus Ammoniumchlorid, Ameisensäure und Harnstoff, so ist die Festigkeit der hergestellten Spanplatten schlechter als bei der erfindungsgemäßen Härterzusammensetzung.

Verwendet man Ammoniumchlorid und Ameisensäure, so sind die Presszeiten zwar deutlich verkürzt, jedoch werden nicht die Festigkeiten erreicht, die mit der erfindungsgemäßen Härterzusammensetzung erzielbar sind.

Verwendet man Ammoniumhlorid und Schwefelsäure als Komponenten, so fällt das Harz aus. Es ergeben sich Probleme beim Pressverfahren und bei den Plattenqualitäten.

Verwendet man eine Kombination aus Ammoniumchlorid, Ameisensäure und Magnesiumchlorid, so erhält man kurze Presszeiten und auch Festigkeiten, die den mit der erfindungsgemäßen Härterzusammensetzung erzielbaren Festigkeiten entsprechen. Allerdings ist die Formaldehydabspaltung höher als bei der erfindungsgemäßen Härterkombination.

Eine Kombination aus Ammoniumchlorid und Harnstoff ohne freie Säure und ohne Magnesiumsalz führt zu einer Verringerung der Formaldehydabspaltung, die Spanplattenquellung verschlechtert sich jedoch durch den Harnstoffzusatz.

Verwendet man dagegen eine erfindungsgemäße Härterzusammensetzung wird festgestellt, daß trotz des zugefügten Harnstoffs die Quellwerte, Preßzeiten und Festigkeiten sehr gut ausfallen.

Theoretische Erklärungen über den vorteilhaften Wirkungsmechanismus der erfindungsgemäßen Härterzusammensetzung liegen noch nicht vor. Möglicherweise entsteht im Falle der Verwendung von Magnesiumchlorid ein Makromolekül aus basischem Magnesiumchlorid, das dem Silikatgerüst strukturell vergleichbar ist. Denkbar ist auch eine Wirkung des elektrischen Feldes in der Ionenumgebung auf den Gelzustand. Elektrolytgleichgewichte zwischen Micellen-Innen- und Außenraum lassen sich auch nicht ausschließen.

Überraschenderweise ergibt sich durch den Harnstoffzusatz in der erfindungsgemäßen Härterzusammensetzung folgender Effekt: freier Harnstoff allein wirkt bekanntlich quellungsverschlechternd, d.h. die Spanplatte quillt in Wasser in höherem Maße. Wenn man den Harnstoff als Komponente in der erfindungsgemäßen Härterzusammensetzung einsetzt, wirkt er dagen überraschend quellungsverbessernd. Eine Erklärung hierfür liegt noch nicht vor. Die Ursache muß aber in einer synergistischen Wirkung der erfindungsgemäßen Härterzusammensetzung liegen.

Die erfindungsgemäße Härterzusammensetzung, bei der eine starke Säure, z.B. Schwefelsäure und Glykol eingesetzt werden (pH einer Lösung der Härterzusammensetzung <2), liefert Spanplatten hoher Qualität. Überraschenderweise ist das Potlife bei anwendungstechnisch relevanten Gelierzeiten, d.h. das Verweilen der Leimflotte bei niedriger Verarbeitungsviskosität, erheblich verlängert. Dieser Vorteil ist deshalb in der Praxis wichtig, weil die Zahl der Flottenansätze kostenrelevant ist.

Die Erfindung wird durch das nachfolgende Beispiel näher erläutert. Darin beziehen sich Teile und Prozente, soweit nicht anders angegeben, auf das Gewicht.

In dem Beispiel wurde Leim A, ein Harnstoff-Formaldehyd-Harz mit einem Molverhältnis von Harnstoff zu Formaldehyd von 1:1,40, einem Trockengehalt von 66,5 %, einer Viskosität von 420 bis 600 mPa•s und einem Methylolgehalt von 6 bis 19 %, zur Herstellung der Leimflotte verwendet.

Die Leimfltote wurde eingesetzt, indem man:

1. den Leim A vorlegte,
2. Wasser zugab und
3. die eigentliche Härterlösung zufügte.

Beispiel 1

Eine Härtermischung aus 18 % Ammoniumchlorid, 5 % Harnstoff, 10 % einer 80 %igen Schwefelsäure, 15 % Diethylenglykol und 52 % Wasser wurde mit Leim A gemischt. Für den Leimansatz wurden zu 100 Teilen Leim A folgende Mengen gegeben:

| Mittelschicht: | 13 Teile Härter, | 4 Teile Wasser |
| Deckschicht : | 7 Teile Härter, | 17 Teile Wasser |

Die Mittelschichtspäne wurde mit 7,3 % beleimt, die Deckschichtspäne mit 9,0 %.

Die Gelierzeit der Leimflotte betrug bei $100^0$C 68 s, bei $30^0$C 17 Stunden. Das Potlife betrug 12 Stunden, d.h. man hatte ein langes Potlife, aber gleichzeitig eine verkürzte Preßzeit von nur 10,6 Sekunden.

Die Plattendaten wurden wie folgt gefunden:

| Dicke | 16,0 mm |
| Dichte | 680 kg/m$^3$ |
| Querzugsfestigkeit V 20 | 0,53 N/mm$^2$ |
| Biegefestigkeit | 17,3 N/mm$^2$ |
| Quellung nach 2 h | 15,1 % |
| Quellung nach 24 h | 19,8 % |
| mg HCHO/100 g Platte | 8,6 |

**Patentansprüche**

**1.** Härterzusammensetzung für die Härtung von Harnstoff-Formaldehyd-Leimharzen, die bis zu 20 Gew.% Melamin und bis zu 5 Gew.% Phenol, jeweils bezogen auf das Gesamtgewicht des Leimharzes, enthalten können, enthaltend

(a) ein Ammoniumsalz einer anorganischen oder organischen Säure,
dadurch gekennzeichnet, daß sie auch
(b) eine Säure, die nicht mit der Härterzusammensetzung reagiert,

(c) Harnstoff,

(d) ein Glykol oder eines seiner funktionellen Derivate, sowie gegebenenfalls

(e) ein Metallsalz

enthält, und daß eine wäßrige Lösung der Härterzusammensetzung einen pH von <2 aufweist.

2. Härterzusammensetzung nach Anspruch 1, dadurch gekennzeichnet, daß das Metallsalz ein Alkali- oder Erdalkalisalz ist.

3. Härterzusammensetzung nach einem der Ansprüche 1 oder 2, dadurch gekennzeichnet, daß das Metallsalz ein Aluminiumsalz ist.

4. Härterzusammensetzung nach einem der Ansprüche 1, 2 oder 3, dadurch gekennzeichnet, daß es sich beim Ammoniumsalz einer anorganischen oder organischen Säure um Ammoniumchlorid, -sulfat, -phosphat, -nitrat, -bromid oder -formiat handelt.

5. Härterzusammensetzung nach einem der Ansprüche 1, 2, 3 oder 4, dadurch gekennzeichnet, daß es sich bei der Säure, die nicht mit der Härterlösung reagiert, um eine anorganische oder organischen Säure mit pKa<3 bei 25⁰C handelt.

6. Härterzusammensetzung nach einem der Ansprüche 1 bis 5, dadurch gekennzeichnet, daß das Glykol oder eines seiner funktionellen Derivate ausgewählt ist unter Ethylenglykol, Diethylenglykol, tri- und tetrameren Oligoethylenglykolen, sowie deren Ethern und Estern, oder daß Mischungen davon vorliegen.

7. Härterzusammensetzung nach einem der Ansprüche 2 bis 6, dadurch gekennzeichnet, daß das Metallsalz ausgewählt ist unter den Chloriden oder Sulfaten des Lithiums, Natriums, Calciums, Magnesiums oder Aluminiums.

8. Verwendung der Härterzusammensetzung nach einem der Ansprüche 1 bis 7 bei der Verleimung von Spanplatten.

## Claims

1. A curing agent composition for curing urea/ formaldehyde adhesive resins, which may contain up to 20% by weight of melamine and up to 5% by weight of phenol, based in each case on the total wieght of the adhesive resin, containing

(a) an ammonium salt of an inorganic or organic acid, wherein said composition furthermore contains

(b) an acid which does not react with the curing agent composition,

(c) urea,

(d) a glycol or one of its functional derivatives and, if required,

(e) a metal salt,

and an aqueous solution of the curing agent composition has a pH of < 2.

2. A curing agent composition as claimed in claim 1, wherein the metal salt is an alkali metal or alkaline earth metal salt.

3. A curing agent composition as claimed in claim 1 or 2, wherein the metal salt is an aluminum salt.

4. A curing agent composition as claimed in claim 1 or 2 or 3, wherein the ammonium salt of an inorganic or organic acid is ammonium chloride, sulfate, phosphate, nitrate, bromide or formate.

5. A curing agent composition as claimed in claim 1 or 2 or 3 or 4, wherein the acid which does not react with the curing agent solution is an inorganic or organic acid having a pKa of < 3 at 25°C.

6. A curing agent composition as claimed in claim 1 or 2 or 3 or 4 or 5, wherein the glycol or one of its functional derivatives is selected from the group consisting of ethylene glycol, diethylene glycol, tri- and tetrameric oligoethylene glycols and their ethers and esters, or wherein a mixture thereof is present.

7. A curing agent composition as claimed in claim 2 or 3 or 4 or 5 or 6, wherein the metal salt is selected from the group consisting of the chlorides and sulfates of lithium, of sodium, of calcium, of magnesium and of aluminum.

8. Use of a curing agent composition as claimed in claim 1 or 2 or 3 or 4 or 5 or 6 or 7 for the adhesive bonding of particle boards.

**Revendications**

1. Composition de durcisseur ou durcissante pour le durcissement de résines de collage à base d'urée et de formaldéhyde qui peuvent contenir jusqu'à 20% en poids de mélamine et jusqu'à 5% en poids de phénol, à chaque fois rapportés au poids total de la résine de collage, contenant
    (a) un sel d'ammonium d'un acide inorganique ou organique,
caractérisée en ce qu'elle contient également
    (b) un acide qui ne réagit pas avec la composition de durcisseur,
    (c) de l'urée,
    (d) un glycol ou un de ses dérivés fonctionnels, comme éventuellement aussi
    (e) un sel de métal
et en ce qu'une solution aqueuse de la composition de durcisseur présente un pH inférieur à 2.

2. Composition de durcisseur suivant la revendication 1, caractérisée en ce que le sel de métal est un sel de métal alcalin ou de métal alcalino-terreux.

3. Composition de durcisseur suivant l'une quelconque des revendications 1 et 2, caractérisée en ce que le sel de métal est un sel d'aluminium.

4. Composition de durcisseur suivant l'une quelconque des revendications 1, 2 et 3, caractérisée en ce qu'il s'agit du formiate, bromure, nitrate, phosphate, sulfate ou chlorure d'ammonium dans le cas du sel d'ammonium d'un acide inorganique ou organique.

5. Composition de durcisseur suivant l'une quelconque des revendications 1, 2, 3 et 4, caractérisée en ce qu'il s'agit d'un acide inorganique ou organique possédant un pKa inférieur à 25°C dans le cas de l'acide qui ne réagit pas avec la solution du durcisseur.

6. Composition de durcisseur suivant l'une quelconque des revendications 1 à 5, caractérisé en ce que l'on choisit le glycol ou l'un de ses dérivés fonctionnels parmi l'éthylèneglycol, le diéthylèneglycol, des oligoéthylèneglycols trimériques et tétramériques, comme aussi leurs éthers et esters, ou les mélanges de ces composés.

7. Composition de durcisseur suivant l'une quelconque des revendications 2 à 6, caractérisée en ce que l'on choisit le sel de métal parmi les chlorures ou sulfates du lithium, sodium, calcium, magnésium ou aluminium.

8. Utilisation de la composition de durcisseur suivant l'une quelconque des revendications 1 à 7, au cours du collage ou encollage de panneaux de particules ou d'agglomérés.